# EUROPÄISCHE PATENTSCHRIFT

(11) **EP 2 518 368 B1**
(45) Veröffentlichungstag und Bekanntmachung des Hinweises auf die Patenterteilung: **14.01.2015**
(21) Anmeldenummer: 11003459.2
(22) Anmeldetag: 27.04.2011
(51) Int. Cl.: F16H 7/24

(54) **Montageeinheit für einen Kettentrieb**
Assembly unit for a chain drive
Unité de montage pour un entraînement par chaîne

(43) Veröffentlichungstag der Anmeldung: 31.10.2012
(73) Patentinhaber: IWIS Motorsysteme GmbH & Co. KG, 81369 München (DE)
(72) Erfinder: Ketterl, Sandra, 84542 Moosinning (DE); Weikert, Michael, 85464 Neufinsing (DE); Gruler, Pia, 82319 Starnberg (DE)
(74) Vertreter: Grünecker, Kinkeldey, Stockmair & Schwanhäusser

(56) Entgegenhaltungen:
- EP-A1- 2 518 368
- EP-A2- 1 531 239
- DE-A1-102009 010 828
- DE-U1- 20 207 186
- DE-U1-202008 014 540

## Beschreibung

Die vorliegende Erfindung betrifft eine Montageeinheit für einen Kettentrieb, insbesondere einen Kettentrieb eines Verbrennungsmotors, mit einer Spann- oder Führungsschiene und einer umlaufenden Endloskette, wobei eine Befestigungseinrichtung die Endloskette an der Spann- oder Führungsschiene in Längsrichtung verrutschsicher fixiert, sowie einen entsprechenden Kettentrieb und eine Spann- oder Führungsschiene für eine solche Montageeinheit.

Spann- und Führungsschienen werden in einer großen Anzahl für verschiedene Anwendungen in Verbrennungsmotoren eingesetzt, sowohl für den Steuerkettentrieb als auch zum Antrieb von Nebenaggregaten, beispielsweise der Ölpumpe. Während Führungsschienen fest an einer bestimmten Position im Kettentrieb angeordnet sind und dort eine sichere Führung der umlaufenden Antriebskette bewirken, sind Spannschienen üblicherweise an einer Lagerstelle auf einem Bolzen schwenkbar gelagert, wobei der Bolzen in einer festen Position zum Kettentrieb angeordnet ist und dazu beispielsweise im Motorblock oder Kurbelgehäuse fixiert ist. Neben der Führung der Antriebskette in einem Trum des Kettentriebs hält die Spannschiene die Antriebskette unter einer definierten Spannung und gleicht damit Toleranzen und das bei längerem Gebrauch auftretende Nachlängen der Kette aus.

Herkömmliche Spann- und Führungsschienen bestehen entweder vollständig aus einem Kunststoffmaterial oder aus einem gegossenem, gestanzten oder gespritzten Grundkörper aus Metall oder einem Duroplast, der mit einem verschleißfestem Gleitbelag versehen wird. Dabei ist der Grundkörper zumeist als Hohlprofil ausgebildet oder mit einer Fachwerksstruktur versehen.

Aktuelle Verbrennungsmotoren weisen eine steigende Anzahl von anzutreibenden Aggregaten auf, bei einem gleichbleibenden oder sich reduzierenden für den Motor zur Verfügung stehenden Bauraum. Des Weiteren weisen moderne Motoren eine steigende Komplexität auf, um den gestiegenen Anforderungen hinsichtlich der Emission und des Kraftstoffverbrauchs von Verbrennungsmotoren gerecht zu werden.

Die gestiegene Anzahl von Nebenaggregaten hat in Verbindung mit der gestiegenen Komplexität der Verbrennungsmotoren die Anordnungs- und Montagemöglichkeiten notwendiger Spann- und Führungsschienen immer weiter reduziert. Zur Montage und Anbringung der Spann- und Führungsschienen sind daher teilweise komplexe Montagevorgänge und aufwändige Befestigungskonstruktionen notwendig, beispielsweise beim Einbau in enge Kettenschächte oder bei der gemeinsamen Anordnung von Nebenaggregaten und Steuerantrieben an der Kurbelwelle eines Verbrennungsmotors.

Neben den herkömmlichen Spann- und Führungsschienen, die in unterschiedlichen Konstruktionen in großer Anzahl in Verbrennungsmotoren eingesetzt werden, gibt es auch bereits Montageeinheiten mit einer Spann- oder Führungsschiene und einer daran vormontierten Endloskette. Beispielsweise beschreibt die DE 37 06 136 T1 eine Spann- oder Führungsschiene, bei der eine Kette von einem Gleitbelagkörper allseitig umschlossen ist. Der Gleitbelagkörper besteht dabei aus zwei zusammengesetzten Teilen, die an einem Grundkörper befestigt werden und nach dem Zusammenbau die darin befindliche Kette sicher umgeben. Des Weiteren zeigt die DE 20 2004 013 921 U1 eine innerhalb eines Kettentriebs angeordnete Spannschiene, deren Seitenwände sich über den Gleitbelagkörper und die darauf angeordnete Antriebskette hinaus nach außen erstrecken. Jenseits der Kette ist an diesen nach außen verlängerten Seitenwänden ein Druckstück vorgesehen, das zusammen mit den Seitenwänden einen Durchlaufkanal für die Antriebskette ausbildet, der eine vormontierte Endloskette lose an der Spannschiene hält. Die gattungsbildende DE 20 2008 014 540 U1 beschreibt eine Montageeinheit für den Steuerkettentrieb von Verbrennungsmotoren, bei der eine Endloskette mittels eines Fixierungselements an der Spannschiene des Kettentriebs verliersicher fixiert ist. Das Fixierungselement, das lösbar in der Spannschiene verriegelt ist, verklemmt im eingebauten Zustand die verwendete Zahnkette derart, dass jede Bewegung der Kette entlang ihrer Laufrichtung verhindert werden kann.

Obwohl sich viele der im Stand der Technik bekannten Spann- oder Führungsschienen sowie Montageeinheiten für Kettentriebe im Einsatz bewährt haben, bestehen durch die vorangetriebene Entwicklung der Motoren und den Innovationsdruck kontinuierliche Bestrebungen, die Konstruktion und Montage der Motoren zu verbessern und dadurch an die steigenden Anforderungen anzupassen. Außerdem handelt es sich bei Montageeinheiten für Kettentriebe und die zugehörigen Spann- oder Führungsschienen um Massenprodukte, bei denen im Hinblick auf die in der Automobilindustrie üblichen hohen Stückzahlen ständig die Notwendigkeit besteht, die eingesetzten Konstruktionen durch einfachere und kostengünstigere Konzepte zu ersetzen, die zu einer Vereinfachung der Motorkonstruktion und/oder zu einer Reduktion des Montageaufwandes führen.

Der vorliegenden Erfindung liegt daher die Aufgabe zugrunde, eine Montageeinheit für einen Kettentrieb der eingangsgenannten Art bereitzustellen, die eine einfache und sichere Montage der Spann- oder Führungsschiene und der Endloskette auch bei einem begrenzten Bauraum und einem komplexen Montageablauf in innovativen Motorkonstruktionen ermöglicht.

Diese Aufgabe wird erfindungsgemäß mittels einer Montageeinheit nach Anspruch 1 gelöst.

Die erfindungsgemäße Ausgestaltung der Montageeinheit mit einer Spann- oder Führungsschiene und einer Endloskette erleichtert deren Montage in einem Kettentrieb und ermöglicht auch bei einem geschlossenen Kettenschacht ohne zusätzliche motorseitige Maßnahmen, zusätzliche Bauteile oder aufwändige Montagehilfsmittel und Montagevorrichtung eine sichere und einfache Montage. Moderne, innovative und damit auch komplexe Motorkonstruktionen erfordern in Zukunft geschlossene Kettenschächte insbesondere für den Steuerkettenantrieb, um kritische Dichtungssituationen durch mehrere einander angrenzende Dichtungsebenen zu vermeiden, beispielsweise zwischen der Steuertriebdeckeldichtung und der Ölwannendichtung bzw. der Zylinderkopfdichtung. Die steigende Komplexität des Motoraufbaus aber auch dessen erhöhte Montageanforderung erzwingen zukünftig eine flexiblere Montage des Motors bei der je nach Montageabschnitt der Motorblock zum Teil mehrfach in seiner Position verändert und/oder gewendet wird. Entsprechend müssen lose Teile während der Montage durch zusätzliche Bauteile oder Hilfsmittel gesichert werden. Zum Beispiel wird bei modernen leistungsstarken Common-Rail-Diesel-Motoren zunächst die Spannschiene für den oberen Kettentrieb im Kurbelgehäuse gelagert, das Kettenrad auf der Zwischenwelle montiert, wobei die Kette in den Motor integriert werden soll, bevor der Zylinderkopf am Motorblock montiert wird. Um ein Verlieren der Endloskette des Kettentriebs während der Montage des Kettentriebs durch eine Wendung des Motors zu vermeiden, werden zusätzliche Bauteile und/oder Montagehilfsmittel eingesetzt. Ohne zusätzliche Montagemittel oder Bauteile rutscht die geschlossene Steuerkette in den Kettenschacht und kann nur durch aufwändige Hilfsmittel oder Vorrichtungen gegriffen und dann auf die Kettenräder aufgelegt werden. Zwar sind im Stand der Technik auch Spann- oder Führungsschienen mit einem geschlossenen Gleit- und Führungskanal an der Führungsschiene bekannt, wie z.B. bei Twinpower-Turbo-Motoren mit Direkteinspritzung, jedoch werden diese aufwändigen und teuren Schienen nur bei besonderen Anforderungen zum Spannen und Führen der Endloskette eingesetzt und können die Endloskette nicht in Längsrichtung, also in und/oder entgegen der Laufrichtung verrutschsicher fixieren.

Diese doppelt gelegte eng anliegende und um mindestens eine Stirnseite der Spann- oder Führungsschiene herum geführte Anordnung der mittels der mindestens einen Befestigungseinrichtung an der Spann- oder Führungsschiene in Längsrichtung verrutschsicher fixierte Endloskette, wobei ein erster Strang der Kette auf dem Gleitbereich oder angrenzenden Stirn- und Rückseitenabschnitten der Spann- oder Führungsschiene und der zweite Strang auf der der Spann- oder Führungsschiene abgewandten Seite des ersten Strangs angeordnet ist, ermöglicht für den Transport der Montageeinheit eine platzsparende Bauweise bei einer gleichzeitig guten Handhabbarkeit der Montageeinheit. Dabei ist insbesondere der auf dem Gleitbereich der Spann- oder Führungsschiene positionierte Abschnitt der Endloskette verrutschsicher fixiert, während lose und einzelne Bereiche auf der dem Gleitbereich abgewandten Seite der Schiene zu finden sind. Dadurch ist die Montageeinheit für den Einbau in den Kettentrieb für den Monteur leicht zu handhaben und in einem späteren Montageschritt die Endloskette einfach von der Spann- oder Führungsschiene zu lösen und in den Kettentrieb einzulegen.

Durch die erfindungsgemäße Montageeinheit für einen Kettentrieb kann auf den zusätzlichen Einsatz von Montagebauteilen und -hilfsmitteln zur verliersicheren Anordnung der Endloskette während der Montage des Kettentriebs oder auf die Verwendung von aufwändigen Spann- und Führungsschienen mit geschlossenen Führungskanälen verzichtet werden. Trotz des Einsatzes einfacher kostengünstiger Komponenten ermöglicht die erfindungsgemäße Montageeinheit eine sichere und schnelle Montage der Spann- oder Führungsschiene und der Endloskette in modernen, komplexen Motoren, auch bei einer einfachen oder mehrfachen Wendung des Motors während der Montage. Im Gegensatz zu bekannten Spann- oder Führungsschienen mit geschlossenen Führungskanälen zur verliersicheren Aufnahme der Endloskette ermöglicht bei der vorliegenden Erfindung die Befestigungseinrichtung eine in Längsrichtung verrutschsichere Fixierung zumindest eines für die Montage entscheidenden Teils der Endloskette an der Spann- oder Führungsschiene.

Neben der Vermeidung einer Blockierung bzw. eines Verklemmens der Endloskette bei den in herkömmlichen Schienen mit geschlossenen Führungskanälen lediglich seitlich begrenzten Endlosketten, beispielsweise aufgrund einer Bewegung der Endloskette in Längsrichtung durch eine Wendung des Motors bei fehlender Spannung des Kettentriebs während der Montage, ermöglicht die erfindungsgemäße Montageeinheit die Verwendung einfacher kostengünstiger Spann- oder Führungsschienen mit einfachen Gleitabschnitten zum Spannen und Führen der Endloskette. Die in Längsrichtung verrutschsichere Fixierung zumindest eines für eine Montage entscheidenden Teils der Endloskette an der Spann- oder Führungsschiene ermöglicht auch bei außen liegenden Spann- oder Führungsschienen ohne geschlossene Führungskanäle für die Kette eine Anordnung der Endloskette in Greifnähe des Monteurs. Durch die zusätzliche Befestigungseinrichtung in der erfindungsgemäßen Ausgestaltung können Spann- oder Führungsschiene und geschlossene Endloskette zunächst unabhängig voneinander hergestellt werden und in einem einfachen Zwischenschritt zusammengefügt werden, der zeitlich und räumlich von der eigentlichen Herstellung der Bauteile der Montageeinheit getrennt sein kann. Demgegenüber müssen Schienen mit geschlossenen Kanälen und die zugehörigen Endlosketten immer miteinander montiert werden, da entweder ein Einfädeln der noch geöffneten Endloskette in oder ein Umschließen der Endloskette durch den Führungskanal notwendig ist. Die Endloskette braucht nicht insgesamt, sondern nur soweit in Längsrichtung verrutschsicher fixiert werden, wie es für den jeweiligen Montagevorgang erforderlich ist. Gemäß einer Ausführungsform ist die mindestens eine Befestigungseinrichtung an der Spann- oder Führungsschiene ausgebildet. Eine Ausbildung der Befestigungseinrichtung an der Spann- oder Führungsschiene ermöglicht eine konstruktiv einfache Lösung und eine verliersicheres Verbleiben der Befestigungseinrichtung nach der Montage des Kettentriebs an der Spann- oder Führungsschiene. Dadurch muss bei der Montage weder auf ein Herausnehmen der Befestigungseinrichtung noch auf ein Verlieren der Befestigungseinrichtung in einem Montageschacht geachtet werden. Bevorzugt ist die Befestigungseinrichtung einteilig mit der Spann- oder Führungsschiene ausgebildet, beispielsweise ist die Befestigungseinrichtung bei der Herstellung des Grundkörpers angespitzt. Dadurch wird eine kostengünstige Ausbildung der Befestigungseinrichtung an der Spann- oder Führungsschiene ermöglicht.

Vorteilhafterweise kann die mindestens eine Befestigungseinrichtung als Schnapp- oder Rastelement ausgebildet sein, wobei das Schnapp- oder Rastelement bevorzugt an/in der Endloskette einrastet. Ein Schnapp- oder Rastelement ermöglicht eine sichere Befestigung durch ein Hintergreifen einer an dem Schnapp- oder Rastelement vorspringenden Rastnase an einem komplimentär ausgebildeten Bauteil der Endloskette bzw. der Spann- oder Führungsschiene. Schnapp- oder Rastelemente sind daher sowohl bei der Befestigung der Endloskette an der Spann- oder Führungsschiene als auch bei der Montage des Kettentriebs einfach zu handhaben. Je nach Ausbildung des Schnapp- oder Rastelements kann ein Lösen der Rastverbindung ausschließlich durch eine entsprechende Zugkraft oder aber in Kombination mit einer seitlichen Kraftkomponente zum Ausrasten der Rastnase erfolgen. Alternativ kann die mindestens eine Befestigungseinrichtung auch als eine an der Spann- oder Führungsschiene eingeformte Befestigungsaufnahme und ein separates komplimentäres Befestigungselement ausgebildet sein. Dabei greift ein solches als Klipp-, Bajonett- oder Schraubelement ausgestaltete Befestigungselement in die komplimentäre Befestigungsaufnahme ein, um während der Vormontage der Montageeinheit die Endloskette in Längsrichtung verrutschsicher an der Spann- oder Führungsschiene zu fixieren.

Für eine besonders kompakte Ausführung der Montageeinheit kann im Wesentlichen die gesamte Endloskette doppelt gelegt und eng anliegend an der Spann- oder Führungsschiene verlaufen. Diese kompakte Ausgestaltung der Montageeinheit mit einer im Wesentlichen, d.h. über mindestens 80 % der gesamten Endloskette, eng an der Spann- oder Führungsschiene anliegenden Endloskette, werden Probleme während des Transports verhindert, z.B. ein Lösen der Endloskette von der Befestigungseinrichtung, sowie eine größere Bewegungsfreiheit während der Montage ermöglicht.

Bevorzugt kann die Spann- oder Führungsschiene einen Gleitbereich zum Führen der Endloskette im Betrieb aufweisen, und die mindestens eine Befestigungseinrichtung auf der dem Gleitbereich abgewandten Seite der Spann- oder Führungsschiene angeordnet sein. Ein solcher Gleitbereich ermöglicht eine sichere Funktion der Spann- oder Führungsschiene im Betrieb, wobei die Anordnung der Befestigungseinrichtung auf der dem Gleitbereich abgewandten Seite jegliche Beeinflussung der Befestigungseinrichtung auf die Funktion der Spann- oder Führungsschiene vermeidet. Dabei wird der Gleitbereich üblicherweise durch einen auf einen Grundträger aufgebrachten Gleitbelag ausgebildet, der im Normalfall auch Seitenführungen zur seitlichen Führung der Endloskette im Betrieb und seitlichen Fixierung der Kette im Transport- und Montagezustand aufweist.

Insbesondere kann die Endloskette mehrere Kettenglieder aufweisen, die durch Kettengelenke miteinander verbunden sind, und die Befestigungseinrichtung kann sich zwischen den Kettengelenken eines Kettenglieds durch das Kettenglied hindurch erstrecken, um die Endloskette an der Spann- oder Führungsschiene in Längsrichtung verrutschsicher zu fixieren. Diese für einen konventionellen Aufbau einer umlaufenden Endloskette ausgerichtete Ausbildung der erfindungsgemäßen Montageeinheit ermöglicht durch die sichere und schnelle Fixierung der Endloskette an der Spann- oder Führungsschiene eine einfache und funktionssichere Lösung.

In einer zweckmäßigen Ausbildung kann die Endloskette eine Hülsenkette sein und die sich durch ein Kettenglied hindurch erstreckende Befestigungseinrichtung kann sich an mindestens einer Hülse eines der zugehörigen Kettengelenke abstützen. Das Hintergreifen oder Festhalten der Befestigungseinrichtung an einer der Hülsen des durch die Befestigungseinrichtung fixierten Kettenglieds ermöglicht eine effektive verrutschsichere Fixierung der als einfache Hülsenkette ausgebildeten Endloskette in dessen Längsrichtung.

Bei einer Variante kann die Endloskette eine Rollenkette sein und die sich durch ein Kettenglied hindurch erstreckende Befestigungseinrichtung kann sich an mindestens einer Rolle eines der zugehörigen Kettengelenke abstützen. Die für einen höher belasteten Einsatz vorgesehene Rollenkette weist auf den zugehörigen Kettengelenken drehbare Rollen auf, an denen sich bei einer geeigneten Ausbildung der Befestigungseinrichtung diese trotzdem formschlüssig abstützen, d.h. hintergreifen, kann, um in einer sinnvollen Lösung die Endloskette an der Spann- oder Führungsschiene in Längsrichtung verrutschsicher zu fixieren.

Eine geeignete Ausgestaltung sieht vor, dass die Spann- oder Führungsschiene mindestens zwei Befestigungseinrichtungen aufweist. Die Verwendung von zwei Befestigungseinrichtungen zur verrutschsicheren Fixierung der Endloskette führt zu einer sicheren kompakten Befestigung der Endloskette an der Spann- oder Führungsschiene. Entsprechend ergib sich eine im Transport- und Montagezustand im Wesentlichen bewegungsfreie Anordnung der Endloskette in der Montageeinheit.

Die vorliegende Erfindung bezieht sich weiter auf einen Kettentrieb, insbesondere für einen Verbrennungsmotor, mit einer Spann- oder Führungsschiene und einer Endloskette, wobei mindestens eine Befestigungseinrichtung vorgesehen ist, und die mindestens eine Befestigungseinrichtung die Endloskette in einer Transport- und Montagestellung an der Spann-oder Führungsschiene in Längsrichtung (in und/oder entgegen der Laufrichtung) verrutschsicher fixiert. Die im Betrieb über die Antriebs- und Abtriebskettenräder des Kettentriebs umlaufend angeordnete Endloskette ist in der Transport- und Montagestellung an der dem Kettentrieb zugeordneten Spann- oder Führungsschiene mittels mindestens einer Befestigungseinrichtung in Längsrichtung verrutschsicher fixiert. Dieser erfindungsgemäße Kettentrieb ermöglicht bei dessen Montage eine verlier- und positionssichere Fixierung der Endloskette an der Spann- oder Führungsschiene des Kettentriebs. Trotz dieser einfachen und günstigen Konstruktion ohne geschlossene Führungsabschnitte an der Spann- oder Führungsschiene ist so eine Montage ohne zusätzliche Montagebauteile oder aufwändige Montagehilfsmittel möglich, da die Kette in der Transport- und Montagestellung auch bei einer mehrfachen Wendung des Motors während der Montage in Greifnähe des Monteurs gehalten wird.

Eine bevorzugte Ausführungsform sieht vor, dass mindestens zwei Befestigungseinrichtungen im Wesentlichen die gesamte Endloskette doppelt gelegt und eng anliegend an der Spann- oder Führungsschiene in einer kompakten Transport- und Montagestellung halten, die doppelt gelegte Endloskette um mindestens eine Stirnseite der Spann- oder Führungsschiene herum geführt ist und die Endloskette durch Lösen der mindestens zwei Befestigungseinrichtungen von der kompakten Transport- und Montagestellung in eine Umschlingungs- und Betriebsstellung überführbar ist. Die Verwendung von mindestens zwei Befestigungseinrichtungen für den erfindungsgemäßen Kettentrieb ermöglicht eine sichere und kompakte Befestigung der Endloskette in einem montagefreundlichen Paket mit einer doppelt gelegten und eng anliegenden Endloskette, die je nach Länge der Endloskette um mindestens eine der Stirnseiten der Spann- oder Führungsschiene zu der einem Gleitbereich abgewandten Seite herumgeführt ist. Die eng an der Spann- oder Führungsschiene anliegende Endloskette minimiert die Bewegungsfreiheit und damit das Risiko eines Ablösens der Endloskette in der Transportstellung und während der Montage.

Eine einfache Modifikation sieht vor, dass die Spann- oder Führungsschiene als außenliegende Spann- oder Führungsschiene ausgebildet ist. Die Ausgestaltung und Verwendung einer außenliegenden Spann- oder Führungsschiene, bei der der Gleitbereich zum Führen der die Kettenräder des Kettentriebs umschließenden Endloskette auf der den Kettenrädern abgewandten Seite der Endloskette aufdrückt, ermöglicht eine einfache und schnelle Standardmontage. Dabei ist auch entsprechend der Druckpunkt einer Spannschiene auf der Rückseite oder Stirnseite der Spannschiene außerhalb der umschließenden Endloskette des Kettentriebs angeordnet und sichert ein einfaches Spannen der Endloskette. Bei einer außenliegenden Spann- oder Führungsschiene ist die Endloskette in der Transport- und Montagestellung in einer konstruktiv einfachen Weise im Gleit- und Führungsbereich der Spann-oder Führungsschiene doppelt gelegt geführt.

Ein weiterer Vorteil ist es, wenn die mindestens eine Befestigungseinrichtung eine an der Endloskette vorgesehene Steuermarkierung an einer bestimmten Position an der Spann-oder Führungsschiene hält. Dadurch kann der Monteur während der Montage des Kettentriebs die Steuermarkierung an der Endloskette einfach auffinden und den Kettentrieb entsprechend ausrichten.

Im Folgenden wird eine Ausführungsform der Erfindung anhand einer Zeichnung näher erläutert. Es zeigen:
- Fig. 1: eine Seitenansicht eines Teils einer erfindungsgemäßen Spann- oder Führungsschiene,
- Fig. 2: eine vergrößerte teilweise freigeschnittene Ansicht der an der Spann- oder Führungsschiene aus Fig. 1 angeordneten Befestigungseinrichtung, und
- Fig. 3: eine Gesamtansicht einer weiteren Ausführungsform einer erfindungsgemäßen Spann- oder Führungsschiene.

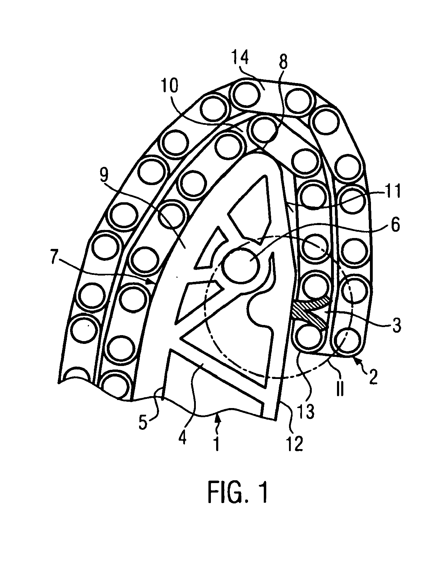

Fig. 1 zeigt einen Teil einer erfindungsgemäßen Montageeinheit mit einer Spann- oder Führungsschiene 1 und einer Endloskette 2 dargestellt in einer Seitenansicht. Dabei ist die Endloskette 2 mittels einer Befestigungseinrichtung 3 an der Spann- oder Führungsschiene 1 verrutschsicher fixiert. Die Spann- oder Führungsschiene 1 weist einen mit Querstreben 4 verstärkten Tragkörper 5 auf, in dem eine Öffnung 6 zur Aufnahme eines Befestigungsbolzens (nicht gezeigt) vorgesehen ist. Diese zur Führung der Endloskette 2 ausgestaltete Spann- oder Führungsschiene 1 umfasst weiter eine Führungsbahn, die von einem Gleitbelagkörper 8, der an dem Tragkörper 5 befestigt ist, und den von dem Tragkörper 5 ausgebildeten Seitenwänden 9 zur seitlichen Begrenzung und Führung der Endloskette 3 ausgebildet ist.

Der untere erste Strang 10 der Endloskette 2 liegt in der Führungsbahn 7 auf dem Gleitbelagkörper 8 auf der Spann- oder Führungsschiene 1 auf und wird durch die Seitenwände 9 der Führungsbahn 7 seitlich geführt und gegen ein Verrutschen gesichert. Der erste Strang 10 wird um die Stirnseite 11 der Spann- oder Führungsschiene 1 im Kontakt mit der Spann-oder Führungsschiene 1 zu dessen Rückenbereich 12 herumgeführt und dort durch die Befestigungseinrichtung 3 am Rückenbereich 12 der Spann- oder Führungsschiene 1 in Längsrichtung, d.h. in und/oder entgegen der durch die Kettenglieder 13 der Endloskette 2 vorgegebenen Bewegungsrichtung (Laufrichtung), verrutschsicher fixiert. Direkt anschließend an das durch die Befestigungseinrichtung 3 fixierte Kettenglied 13 der Endloskette schwenkt die Endloskette 2 von der Spann- oder Führungsschiene 1 weg und wird als zweiter Strang 14 der Endloskette 2 oberhalb des ersten Strangs 10 im Abstand zur Spann- oder Führungsschiene 1 zurückgeführt. Im Betrieb bilden die sich berührenden Seiten des ersten Strangs 10 und des zweiten Strangs 14 der Endloskette 2 den Innenkreis der Endloskette 2 in dem die zugehörigen Kettenräder des Kettentriebs geführt sind.

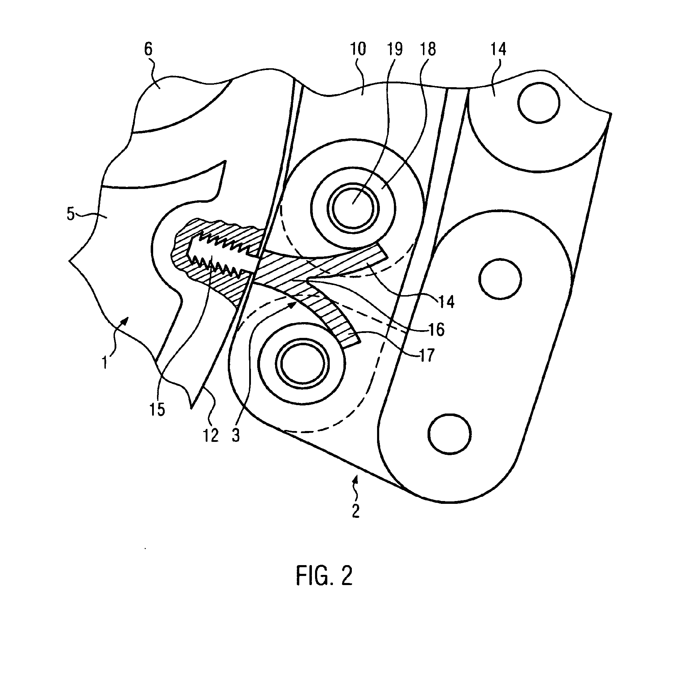

Fig. 2 stellt in einer vergrößerten Ansicht eine zum Teil frei geschnittene Darstellung des Ausschnitts II aus Fig. 1 dar. Das in dieser Ausführungsform bei der spritzgießtechnischen Herstellung des Tragkörpers 5 eingespritzte Befestigungseinrichtung 3 hält den ersten Strang 10 der Endloskette 2 verrutschsicher fixiert am Rückenbereich 12 der Spann- oder Führungsschiene 1. Die Befestigungseinrichtung 3 weist dazu einen Sockelbereich 15 auf, der bei der Herstellung des Tragkörpers 5 direkt umspritz wird, oder der nachträglich als Teil eines separaten Befestigungselements in einer am Tragkörper 5 vorgesehenen Befestigungsaufnahme eingeführt wird. Die Befestigungseinrichtung 3 weist weiter ein vom Tragkörper 5 vorstehendes Rastelement 16 auf mit zwei sich in Laufrichtung der Endloskette 2 seitlich erstreckende Rastnasen 17 die sich an den Gelenkhülsen 18 der zugehörigen Kettengelenke des Kettenglieds 13 abstützen bzw. dahinter verrasten. In den Gelenkhülsen 18 sind die zugehörigen Gelenkbolzen 19 der Kettengelenke schwenkbar gelagert.

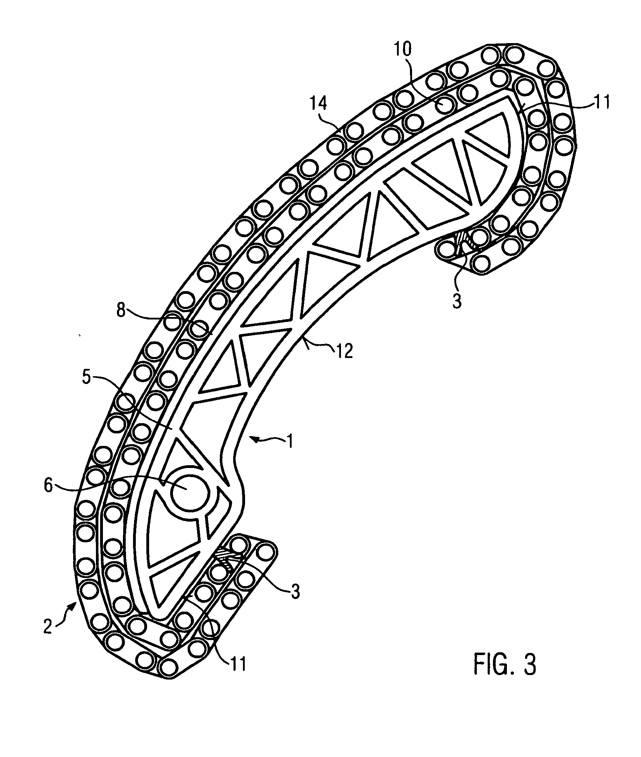

Eine weitere Ausführung der erfindungsgemäßen Montageeinheit für einen Kettentrieb mit einer Spann- oder Führungsschiene 1 und einer Endloskette 2 wird in Fig. 3 gezeigt. Diese hier als Spannelement ausgebildete Spann- oder Führungsschiene 1 weist eine im Wesentlichen über die gesamte Länge der Endloskette 2 in zwei übereinander geführten Strängen 10, 14 doppelt gelegte und eng anliegende Endloskette 2 auf, die an beiden Enden der Spann- oder Führungsschiene 1 um die Stirnseiten 11 herum gelegt und im Rückenbereich 12 in Laufrichtung verrutschsicher fixiert ist. Dazu sind im Rückenbereich 12 bzw. im Bereich der Stirnseiten 11, der sich an dem an der Öffnung 6 des Tragkörpers 5 schwenkbar gelagerten Ende der Spann- oder Führungsschiene 1 sich in Richtung des Rückenbereichs 12 erstreckt, zwei Befestigungseinrichtungen 3 vorgesehen. Die Befestigungseinrichtungen 3 sind wiederum jeweils durch ein Kettenglied 13 des ersten Strangs 10 hindurchgeführt und fixieren die Endloskette 2 doppelt gelegt an der Spann- oder Führungsschiene 1. Dabei sind die Befestigungseinrichtungen 3 wie in Fig. 2 im Detail dargestellt als Rastelemente 16 ausgebildet, dessen Rastnasen 17 sich an den Gelenkhülsen 18 oder an entsprechenden Rollen der zugehörigen Kettengelenke abstützen und verrasten. Im Gegensatz zu der in Fig. 1 dargestellten Spann- oder Führungsschiene 1 mit reiner Führungsfunktion der Endloskette 2 weist diese in Fig. 3 gezeigte Spann- oder Führungsschiene 1 mit Spannfunktion einen Gleitblagkörper 8 auf, der nicht nur den Gleitbelag der Führungsbahn 7 ausbildet, sondern zusätzlich auch die seitlichen Begrenzungen zur seitlichen Führung der Endloskette 2.

Nach der separaten Herstellung der Spann- oder Führungsschiene 1, beispielsweise als spritzgegossener Tragkörper 5 und aufgeklippster Gleitbelagkörper 8, und der geschlossenen umlaufenden Endloskette 2 in einer für den Kettentrieb benötigten Länge werden diese Elemente der Montageeinheit unabhängig von der Herstellung der Spann- oder Führungsschiene 1 und Endloskette 2 in einem räumlich und zeitlich separaten Montageschritt zusammengefügt. Dazu wird die Endloskette 2 doppelt gelegt in einem ersten Strang 10 und einem zweiten Strang 14 auf die Spann- oder Führungsschiene 1 positioniert und auf das am Rückenbereich 12 vorgesehene Befestigungselement 3 aufgeklippst, bzw. mitsamt eines Befestigungselements 3 in einer entsprechenden Befestigungsaufnahme fixiert. Je nach Ausführungsform der erfindungsgemäßen Montageeinheit wird das zweite Ende der Endloskette 2 mittels einer zweiten Befestigungseinrichtung 3 an der Spann- oder Führungsschiene 1 fixiert um die Endloskette 2 nicht nur in Längsrichtung verrutschsicher zu fixeren, sondern auch die im Wesentlichen gesamte Endloskette 2 doppelt gelegt und eng anliegend an der als Spann- oder Führungsschiene 1 verlaufen zu lassen. Alternativ kann die Endloskette 2 durch weitere Mittel an der Spann- oder Führungsschiene 1 gehalten werden oder locker auf der Führungsbahn 7 an der Vorderseite der Spann- oder Führungsschiene 1 geführt werden.

Die erfindungsgemäße Montageeinheit wird bei der Endmontage eines Kettentriebs in einem Verbrennungsmotor zunächst über die Öffnung 6 an der Position der Spann- oder Führungsschiene 1 angeordnet, wobei die Endloskette 2 zunächst in der Transport- oder Montagestellung an der Spann- oder Führungsschiene 1 verbleibt. Nach weiteren Montageschritten und Wendungen des Motors zum Zusammenbau des Verbrennungsmotors wird die Endloskette 2 des Kettentriebs aus der kompakten Transport- und Montagestellung an der Spann- oder Führungsschiene 1 gelöst, indem die Endloskette 2 von dem Rastelement 16 abgezogen oder hilfsweise durch ein Zusammendrücken der Rastnasen 17 entriegelt werden, und in eine Umschlingungs- und Betriebsstellung des Kettentriebs auf die zugehörigen Kettenräder aufgelegt. Nach der Anordnung eines zugehörigen Kettenspanners an das Spannelement des Kettentriebs ist der Kettentrieb in wenigen kurzen und sicheren Arbeitsschritten in einer Betriebsstellung.

## Patentansprüche

1. Montageeinheit für einen Kettentrieb, insbesondere eines Verbrennungsmotors, mit einer Spann- oder Führungsschiene (1) und einer Endloskette (2), wobei mindestens eine Befestigungseinrichtung (3) vorgesehen ist und die mindestens eine Befestigungseinrichtung (3) die Endloskette (2) an der Spann- oder Führungsschiene (1) in Längsrichtung verrutschsicher fixiert,
**dadurch gekennzeichnet, dass** die Endloskette in mindestens einem Bereich an der Spann- oder Führungsschiene (1) doppelt gelegt und eng anliegend verläuft und um mindestens eine Stirnseite (11) der Spann- oder Führungsschiene (1) herumgeführt ist.

2. Montageeinheit nach Anspruch 1,
**dadurch gekennzeichnet, dass** die mindestens eine Befestigungseinrichtung (3) an der Spann- oder Führungsschiene (1) ausgebildet ist, bevorzugt einteilig mit der Spann- oder Führungsschiene (1) ausgebildet ist.

3. Montageeinheit nach Anspruch 1 oder 2,
**dadurch gekennzeichnet, dass** die mindestens eine Befestigungseinrichtung (3) als Schnapp- oder Rastelement (16) ausgebildet ist, wobei das Schnapp- oder Rastelement (16) bevorzugt an/in der Endloskette (2) einrastet.

4. Montageeinheit nach einem der Ansprüche 1 bis 3,
**dadurch gekennzeichnet, dass** im Wesentlichen die gesamte Endloskette doppelt gelegt und eng anliegend an der Spann- oder Führungsschiene (1) verläuft.

5. Montageeinheit nach einem der Ansprüche 1 bis 4,
**dadurch gekennzeichnet, dass** die Spann- oder Führungsschiene (1) einen Gleitbereich (7) zum Führen der Endloskette (2) im Betrieb aufweist, und die mindestens eine Befestigungseinrichtung (3) auf der dem Gleitbereich (7) abgewandten Rückseite (12) der Spann- oder Führungsschiene (1) angeordnet ist.

6. Montageeinheit nach einem der Ansprüche 1 bis 5,
**dadurch gekennzeichnet, dass** die Endloskette (2) mehrere Kettenglieder (13) aufweist, die durch Kettengelenke miteinander verbunden sind, und die Befestigungseinrichtung (3) sich zwischen den Kettengelenken durch ein Kettenglied hindurch erstreckt, um die Endloskette (2) an der Spann- oder Führungsschiene (1) in Längsrichtung verrutschsicher zu fixieren.

7. Montageeinheit nach Anspruch 6,
**dadurch gekennzeichnet, dass** die Endloskette (2) eine Hülsenkette ist und die sich durch ein Kettenglied (13) hindurch erstreckende Befestigungseinrichtung (3) sich an mindestens einer Hülse (18) eines der zugehörigen Kettengelenke abstützt.

8. Montageeinheit nach Anspruch 6,
**dadurch gekennzeichnet, dass** die Endloskette (2) eine Rollenkette ist und die sich durch ein Kettenglied (13) hindurch erstreckende Befestigungseinrichtung (3) sich an mindestens einer Rolle eines der zugehörigen Kettengelenke abstützt.

9. Montageeinheit nach einem der Ansprüche 1 bis 8,
**dadurch gekennzeichnet, dass** mindestens zwei Befestigungseinrichtungen (3) vorgesehen sind und die mindestens zwei Befestigungseinrichtungen (3) bevorzugt an der Spann- oder Führungsschiene (1) ausgebildet sind.

10. Kettentrieb, insbesondere für einen Verbrennungsmotor, mit einer Montageeinheit nach einem der Ansprüche 1 bis 9, wobei die mindestens eine Befestigungseinrichtung (3) die Endloskette (2) in einer Transport- und Montagestellung an der Spann- oder Führungsschiene (1) in Längsrichtung verrutschsicher fixiert.

11. Kettentrieb nach Anspruch 10,
**dadurch gekennzeichnet, dass** mindestens zwei Befestigungseinrichtungen (3) im Wesentlichen die gesamte Endloskette (2) doppelt gelegt und eng anliegend an der Spann-oder Führungsschiene (1) in einer kompakten Transport- und Montagestellung halten, die doppelte gelegte Endloskette (2) um mindestens eine Stirnseite (11) der Spann- oder Führungsschiene (1) herumgeführt ist und die Endloskette (2) durch Lösen der mindestens zwei Befestigungseinrichtungen (3) von der kompakten Transport- und Montagestellung in eine Umschlingungs- und Betriebsstellung überführbar ist.

12. Kettentrieb nach Anspruch 10 oder 11,
**dadurch gekennzeichnet, dass** die Spann- oder Führungsschiene (1) als außen liegende Spann- oder Führungsschiene (1) ausgebildet ist.

13. Kettentrieb nach einem der Ansprüche 10 bis 12,
**dadurch gekennzeichnet, dass** die mindestens eine Befestigungseinrichtung (3) eine an der Endloskette (2) vorgesehene Steuermarkierung an einer bestimmten Position an der Spann- oder Führungsschiene (1) hält.

## Claims

1. A mounting assembly for a chain drive, in particular for an internal combustion engine, having a tensioning or guide rail (1) and an endless chain (2), wherein at least one fastening device (3) is provided and the endless chain (2) is fixed by the at least one fastening device (3) in longitudinal direction in a slip-proof manner to the tensioning or guide rail (1);
**characterized in that** the endless chain is arranged double-layered on at least one portion of the tensioning or guide rail (1) and extends closely adjacent and is guided along at least one end face (11) of the tensioning or guide rail (1).

2. The mounting assembly according to claim 1, wherein the at least one fastening device (3) is formed on the tensioning or guide rail (1), preferably is made in one piece with the tensioning or guide rail (1).

3. The mounting assembly according to claim 1 or 2, wherein the at least one fastening device (3) is formed as a snap or click element (16), wherein the snap or click element (16) preferably engages into the endless chain (2).

4. The mounting assembly according to one of claims 1 to 3, wherein substantially the entire endless chain extends double-layered and closely adjacent to the tensioning or guide rail (1).

5. The mounting assembly according to one of claims 1 to 4, wherein the tensioning or guide rail (1) having a sliding portion (7) for guiding in use the endless chain (2), and wherein the at least one fastening device (3) is provided on the rear side (12) of the tensioning or guide rail (1) which is opposite the sliding portion (7).

6. The mounting assembly according to one of claims 1 to 5, wherein the endless chain (2) comprises a plurality of chain links (13) interconnected to each other by chain joints, and wherein the fastening device (3) extends between the chain joints through a chain link for fixing the endless chain (2) in longitudinal direction in a slip-proof manner to the tensioning or guide rail (1).

7. The mounting assembly according to claim 6, wherein the endless chain (2) is a sleeve-type chain, and wherein fastening device (3), which extends through a chain link (13), is supported on at least one sleeve (18) of the corresponding chain links.

8. The mounting assembly according to claim 6, wherein the endless chain (2) is a roller chain, and wherein the fastening device (3), which extends through a chain link (13), is supported on at least a roll of the corresponding chain links.

9. The mounting assembly according to one of claims 1 to 8, wherein at least two fastening devices (3) are provided and the at least two fastening devices (3) are preferably formed on the tensioning or guide rail (1).

10. A chain drive, in particular for an internal combustion engine, having a mounting assembly according to one of claims 1 to 9, wherein at least one fastening device (3) fixing the endless chain (2) in longitudinal direction in a slip-proof manner to the tensioning or guide rail (1) in a transport and installation position.

11. The chain drive according to claim 10, wherein at least two fastening devices (3) keeping the substantially entire endless chain (2) double-layered and closely adjacent to the tensioning or guide rail (1) in a compact transport and installation portion, wherein the double-layered endless chain (2) extends around at least one end face (11) of the tensioning or guide rail (1) and the endless chain (2) is transferrable from the compact transport and installation position into an encircling and operating position by releasing the at least two fastening devices (3).

12. The chain drive according to claims 10 or 11, wherein the tensioning or guide rail (1) is formed as an external tensioning or guide rail (1).

13. The chain drive according to one of claims 10 to 12, wherein the at least one fastening device (3) keeping a control marking of the endless chain (2) on a given position on the tensioning or guide rail (1).

## Revendications

1. Unité de montage pour un système d'entraînement par chaîne, notamment d'un moteur à combustion interne, comprenant une glissière de guidage ou de mise en tension (1) et une chaîne sans fin (2), au moins un dispositif de fixation (3) étant prévu et ledit au moins un dispositif de fixation (3) fixant la chaîne sans fin (2) sur la glissière de guidage ou de mise en tension (1), d'une manière sécurisée à l'encontre d'un glissement dans la direction longitudinale,
**caractérisée en ce que** la chaîne sans fin s'étend, au moins dans une zone, de manière doublée et étroitement en appui sur la glissière de guidage ou de mise en tension (1), et est placée autour d'au moins un côté frontal (11) de la glissière de guidage ou de mise en tension (1).

2. Unité de montage selon la revendication 1, **caractérisée en ce que** ledit au moins un dispositif de fixation (3) est formé sur la glissière de guidage ou de mise en tension (1), de préférence réalisé d'un seul tenant avec la glissière de guidage ou de mise en tension (1).

3. Unité de montage selon la revendication 1 ou la revendication 2,
**caractérisée en ce que** ledit au moins un dispositif de fixation (3) est réalisé en tant qu'élément d'enclenchement ou d'encliquetage (16), l'élément d'enclenchement ou d'encliquetage (16) venant de préférence s'encliqueter sur/dans la chaîne sans fin (2).

4. Unité de montage selon l'une des revendications 1 à 3,
**caractérisée en ce que** sensiblement la totalité de la chaîne sans fin s'étend de manière doublée et étroitement en appui sur la glissière de guidage ou de mise en tension (1).

5. Unité de montage selon l'une des revendications 1 à 4,
**caractérisée en ce que** la glissière de guidage ou de mise en tension (1) présente une zone de glissement (7) pour guider la chaîne sans fin (2) en fonctionnement, et ledit au moins un dispositif de fixation (3) est agencé sur le côté arrière (12) de la glissière de guidage ou de mise en tension (1), qui est opposé à celui où se trouve la zone de glissement (7).

6. Unité de montage selon l'une des revendications 1 à 5,
**caractérisée en ce que** la chaîne sans fin (2) présente plusieurs maillons de chaîne (13), qui sont reliés mutuellement par des articulations de chaîne, et le dispositif de fixation (3) s'étend à travers un maillon de chaîne entre les articulations de chaîne, pour fixer la chaîne sans fin (2) sur la glissière de guidage ou de mise en tension (1), d'une manière sécurisée à l'encontre d'un glissement dans la direction longitudinale.

7. Unité de montage selon la revendication 6, **caractérisée en ce que** la chaîne sans fin (2) est une chaîne à douilles, et le dispositif de fixation (3), qui s'étend à travers un maillon de chaîne (13), s'appuie contre au moins une douille (18) de l'une des articulations de chaîne associées.

8. Unité de montage selon la revendication 6, **caractérisée en ce que** la chaîne sans fin (2) est une chaîne à rouleaux, et le dispositif de fixation (3), qui s'étend à travers un maillon de chaîne (13), s'appuie contre au moins un rouleau de l'une des articulations de chaîne associées.

9. Unité de montage selon l'une des revendications 1 à 8,
**caractérisée en ce que** sont prévus au moins deux dispositifs de fixation (3), et lesdits au moins deux dispositifs de fixation (3) sont de préférence formés sur la glissière de guidage ou de mise en tension (1).

10. Système d'entraînement par chaine, notamment destiné à un moteur à combustion interne, comprenant une unité de montage selon l'une des revendications 1 à 9, dans lequel, dans une position de montage et de transport, ledit au moins un dispositif de fixation (3) fixe la chaîne sans fin (2) sur la glissière de guidage ou de mise en tension (1), d'une manière sécurisée à l'encontre d'un glissement dans la direction longitudinale.

11. Système d'entraînement par chaîne selon la revendication 10,
**caractérisé en ce qu'**au moins deux dispositifs de fixation (3) maintiennent sensiblement la totalité de la chaîne sans fin (2) de manière doublée et étroitement en appui sur la glissière de guidage ou de mise en tension (1), dans une position de montage et de transport, **en ce que** la chaîne sans fin (2) doublée est placée autour d'au moins un côté frontal (11) de la glissière de guidage ou de mise en tension (1), et la chaîne sans fin (2) peut, par interruption desdits au moins deux dispositifs de fixation (3), être transférée de la position compacte de montage et de transport, à une position d'enroulement et de fonctionnement.

12. Système d'entraînement par chaîne selon la revendication 10 ou la revendication 11,
**caractérisé en ce que** la glissière de guidage ou de mise en tension (1) est réalisée en tant que glissière de guidage ou de mise en tension (1) située à l'extérieur.

13. Système d'entraînement par chaîne selon l'une des revendications 10 à 12,
**caractérisé en ce que** ledit au moins un dispositif de fixation (3) maintient une marque de commande prévue sur la chaîne sans fin (2), dans une position déterminée sur la glissière de guidage ou de mise en tension (1).
